(19) **Europäisches Patentamt**
**European Patent Office**
**Office européen des brevets**

(11) **EP 2 340 593 B1**

(12) **EUROPÄISCHE PATENTSCHRIFT**

(45) Veröffentlichungstag und Bekanntmachung des Hinweises auf die Patenterteilung:
**02.07.2014  Patentblatt 2014/27**

(51) Int Cl.:
**H02H 9/04** *(2006.01)*      **H02H 3/44** *(2006.01)*

(21) Anmeldenummer: **09748279.8**

(22) Anmeldetag: **20.10.2009**

(86) Internationale Anmeldenummer:
**PCT/EP2009/063742**

(87) Internationale Veröffentlichungsnummer:
**WO 2010/046365 (29.04.2010 Gazette 2010/17)**

(54) **MEHRSTUFIGE ÜBERSPANNUNGSSCHUTZSCHALTUNG, INSBESONDERE FÜR INFORMATIONSTECHNISCHE ANLAGEN**

MULTI-STAGED OVERVOLTAGE PROTECTION CIRCUIT, IN PARTICULAR FOR INFORMATION-TECHNOLOGY SYSTEMS

CIRCUIT DE PROTECTION CONTRE LES SURTENSIONS À PLUSIEURS ÉTAGES, EN PARTICULIER POUR INSTALLATIONS INFORMATIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.10.2008   DE 102008052488
27.05.2009   DE 102009022832**

(43) Veröffentlichungstag der Anmeldung:
**06.07.2011   Patentblatt 2011/27**

(73) Patentinhaber: **Dehn + Söhne GmbH + Co. KG
92318 Neumarkt/Opf. (DE)**

(72) Erfinder:
• **IGL, Peter
  90602 Seligenporten (DE)**
• **BOEHM, Thomas
  92366 Hohenfels (DE)**

(74) Vertreter: **Meissner, Bolte & Partner GbR
Anwaltssozietät GbR
Widenmayerstrasse 47
80538 München (DE)**

(56) Entgegenhaltungen:
EP-A2- 0 827 316      US-A- 5 333 105
US-A- 5 940 259      US-A1- 2005 180 080

EP 2 340 593 B1

## Beschreibung

Die Erfindung betrifft eine mehrstufige Überspannungsschutzschaltung, insbesondere für informationstechnische Anlagen, mit mindestens einem Grobschutz- und mindestens einem Feinschutzelement, wobei das mindestens eine Feinschutzelement von einer Ansteuerungseinrichtung schwellwertabhängig aktivierbar ist, gemäß Oberbegriff des Patentanspruchs 1.

Überspannungsschutzschaltungen, die aus mehreren Stufen bestehen, gehören zum bekannten Stand der Technik. Üblicherweise wird hier eine erste Stufe durch ein Bauelement gebildet, welches hohe Ströme ableiten kann, jedoch eine vergleichsweise hohe Ansprechspannung besitzt. Ein solches Bauelement kann ein Gasentladungsableiter sein. Eine solche Schutzschaltung ist zwar in der Anlage, in einem großen Nennspannungsbereich eingesetzt zu werden, jedoch bietet diese aufgrund des hohen Schutzpegels allein noch keinen ausreichenden Schutz für informationstechnische Geräte wie Computer, Telefonanlagen oder dergleichen. Deshalb gibt es üblicherweise eine weitere Stufe, bei der ein Feinschutzelement, nämlich eine Z-Diode, eine TVS-Diode oder Ähnliches vorhanden ist, das auf die Signalspannung ausgelegt wird, so dass eine Begrenzung möglichst nahe der Nennspannung sichergestellt ist. Zwischen Grobschutz- und Feinschutzelement ist mindestens ein Entkopplungselement vorhanden, das zur Koordination des Verhaltens der vorerwähnten Stufen dient.

Die DE 198 45 281 A1 offenbart eine Verstärkerschaltung mit Überspannungsschutzeinrichtung. Dort ist als Feinschutzelement ein Transistor vorhanden, der beim Überschreiten eines fest vorgegebenen Schwellwerts die vorhandenen Verstärker-Signaladern kurzschließt. Konkret ist in Überspannungs-Störsignalrichtung dem eigentlichen Überspannungsableiter eine Transistorschutzschaltung nachgeschaltet, deren Transistoren im üblichen Betrieb gesperrt sind und die bei Auftreten einer Überspannung unter Begrenzung der maximal zulässigen Spannung durchschalten.

Bei der Vorrichtung zur Spannungsbegrenzung nach DE 10 2004 036 164 A1 ist mindestens ein Spannungseingang und ein Spannungsausgang vorhanden. Eine erste Spannungsbegrenzungseinheit ist mit mindestens einem Eingang und einem Ausgang versehen derart, dass in der ersten Spannungsbegrenzungseinheit mindestens ein erster Schalter zwischen Eingang und Ausgang befindlich ist. In der ersten Spannungsbegrenzungseinheit ist weiterhin ein Spannungssensor vorgesehen, welcher derart ausgestaltet ist, dass er den ersten Schalter in dem Fall öffnet, dass am Eingang der ersten Spannungsbegrenzungseinheit eine Spannung anliegt, die größer als ein vorgebbarer maximaler Spannungswert ist.

Die EP 1 278 283 A2 zeigt eine Vorrichtung zum Schutz elektronischer Bauelemente vor Überspannungen mit mindestens einem Transistor, der mittels einer Ansteuerschaltung bei vorbestimmten Überspannungswerten durchschaltbar ist, wodurch eine Umwandlung störender elektrischer Energie in Wärmeenergie erfolgt. Als Feinschutzelement wird dort eine Z-Diode eingesetzt.

Die PCT/WO 2004/006408 A1 offenbart eine Schutzschaltung mit einem elektronischen Entkopplungselement TBU, welches bei Überschreiten eines Stromwerts hochohmig wird, so dass auf diese Weise der Stromfluss zu einem Endgerät begrenzbar ist. Nachteilig ist bei dieser Lehre, dass im Endgerät ein spannungsbegrenzendes Bauteil vorhanden sein muss, um einen ausreichend hohen Stromfluss bei einer Überspannung zu erzeugen.

Bei der Schutzeinheit für ein Modem nach PCT/WO 02/50973 A1 wird durch einen Thyristor ein Feinschutzelement zugeschaltet. Die Ansteuerung des Thyristors ist hier über den Stromfluss zu einem Endgerät realisiert. Nachteilig an dieser Schaltungsanordnung ist, dass in dem Endgerät ebenfalls ein spannungsbegrenzendes Bauteil vorhanden sein muss, um einen ausreichenden Stromfluss bei einer Überspannung zu erzeugen.

Eine andere mehrstufige Überspannungsschutzschaltung ist aus EP 0 827 316 bekannt.

Ausgehend von den Lösungen des Standes der Technik ist es Aufgabe der Erfindung, eine weiterentwickelte mehrstufige Überspannungsschutzschaltung, insbesondere für informationstechnische Anlagen anzugeben, die über einen möglichst großen Spannungsbereich eingesetzt werden kann und mit deren Hilfe eine möglichst nahe an der Betriebsspannung einsetzende Begrenzung einer Überspannung erreichbar ist.

Die Lösung der Aufgabe der Erfindung erfolgt durch die Merkmalskombination gemäß der Lehre nach Patentanspruch 1, wobei die Unteransprüche mindestens zweckmäßige Ausgestaltungen und Weiterbildungen darstellen.

Die erfindungsgemäße mehrstufige Überspannungsschutzschaltung ist in der Lage, sich automatisch auf anliegende Betriebsspannungen einzustellen. Wird der Wert der erfassten Betriebsspannung durch eine Überspannung unzulässig überschritten, erfolgt eine Begrenzung des Spannungspegels und es wird der folgende Störstrom abgeleitet.

Im Unterschied zu bekannten Überspannungsschutzschaltungen ist es nicht notwendig, für jeden Betriebsspannungspegel einen speziellen Typ eines Überspannungsschutzgeräts aufzubauen.

Erfindungsgemäß wird die anliegende Betriebsspannung auf eine Auswerteeinrichtung geführt, welche eine Referenzspannung erzeugt.

Weiterhin ist eine Bewertungseinheit vorgesehen, um erstens zu überprüfen, ob die aktuelle Betriebsspannung über der Referenzspannung liegt. Zweitens wird überprüft, ob die Werteüberschreitung einen vorherbestimmten Pegel übersteigt, um drittens festzustellen, ob die Änderungsgeschwindigkeit der Betriebsspannung größer als ein weiterer vorherbestimmter Wert ist. Wenn dieser Fall eintritt, wird auf eine transiente Überspannung geschlussfolgert, wobei dann die Ansteuerungseinrichtung von der Auswerteeinrichtung ein Aktivierungssignal erhält.

Bei einer Werteüberschreitung des vorherbestimmten Pegels der Betriebsspannung, die mit geringen Änderungsgeschwindigkeiten einhergeht, stellt die Auswerteeinrichtung eine neue, an die momentanen Betriebsverhältnisse angepasste, aktuelle Referenzspannung bereit.

Bei einer Ausgestaltung der Erfindung wird in der Auswerteeinrichtung die Betriebsspannung über eine Diode D2 auf einen Kondensator C1 geführt, der über einen Reihenwiderstand R3 mit Betriebsspannungspotential verbunden ist, wobei die über dem Kondensator C1 anliegende Spannung die Referenzspannung ist.

Die Zeitkonstante für die Änderungsgeschwindigkeit der Betriebsspannung wird aus dem Widerstand R3 und dem Kondensator C1 definiert, wobei beim Überschreiten der Zeitkonstante über R3 eine auswertbare Spannung anliegt.

Am Verbindungspunkt zwischen dem Kondensator C1 und dem Widerstand R3 ist eine Zenerdiode D3 vorgesehen, welche den zusätzlichen Bereich der Änderung der Betriebsspannung definiert.

Ausgangsseitig der Zenerdiode D3 ist ein gegen Betriebsspannungspotential geschalteter weiterer Kondensator C2 vorgesehen, um die Anstiegsgeschwindigkeit der Zündspannung des Feinschutzelements zu begrenzen.

Das Feinschutzelement wird über einen Transistor angesteuert, dessen Basis am vorerwähnten Kondensator C2 angeschlossen ist.

Zwischen dem Betriebsspannungspotential und der Basis des Transistors ist eine weitere Zenerdiode D4 zur Einstellung der maximalen Begrenzungsspannung geschaltet.

Zwischen den Schutzstufen ist darüber hinaus in an sich bekannter Weise ein Entkopplungselement in Form eines Widerstands, einer Induktivität, einer Kapazität und/oder einer TBU-Baugruppe vorhanden.

Die Erfindung soll nachstehend anhand eines Ausführungsbeispiels sowie unter Zuhilfenahme von Figuren näher erläutert werden.

Hierbei zeigen:

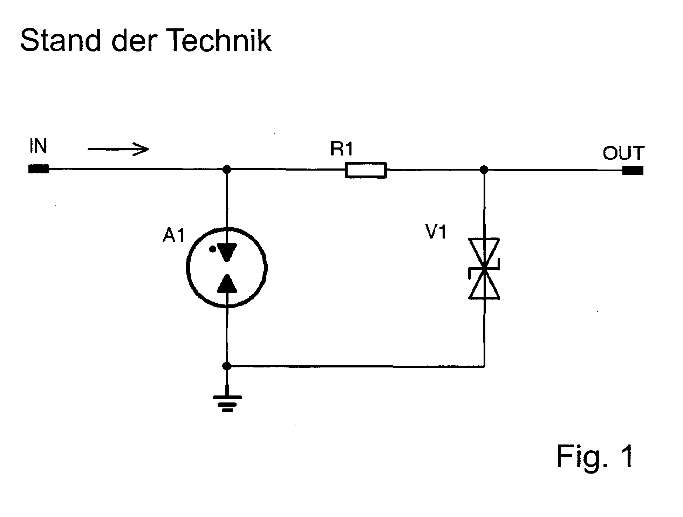

Fig. 1    eine bekannte Überspannungsschutzschaltung des Standes der Technik, die aus zwei Stufen A1 und V1 besteht und wobei ein Entkopplungswiderstand R1 zwischen dem Eingang IN und dem Ausgang OUT geschaltet ist;

Fig. 2    ein Blockschaltbild der erfindungsgemäßen Vorrichtung;

Fig. 3    ein Programmablaufplan hinsichtlich der Bewertung einer Spannungsänderung durch die Auswerteeinrichtung;

Fig. 4    den Spannungs-Zeit-Verlauf bei einer Änderung innerhalb eines zulässigen Bereichs um die Referenzspannung, beispielsweise um eine Signalspannung, die einer Versorgungsspannung überlagert ist, wobei hier keine Begrenzung dieser anlagebedingten Änderung der Betriebsspannung erfolgt;

Fig. 5    einen Spannungs-Zeit-Verlauf in dem Fall, dass der zulässige Bereich um die Referenzspannung überschritten wird, jedoch die Anstiegsgeschwindigkeit des Spannungsänderung noch nicht einen festgelegten Wert überschreitet, so dass es sich ebenfalls um eine zulässige Änderung der Betriebsspannung handelt, deren Folge keine Begrenzung des Spannungspegels ist, jedoch eine neue Referenzspannung generiert wird;

Fig. 6    Spannungs-Zeit-Verläufe, bei denen der zulässige Bereich um die Referenzspannung überschritten, die Anstiegsgeschwindigkeit der Spannungsänderung ebenfalls einen festgelegten Wert überschreitet, wobei es sich um eine transiente Überspannung handelt mit der Folge, dass eine Begrenzung der vorliegenden Spannung eingeleitet wird;

Fig. 7    ein erstes schaltungstechnisches Beispiel der Ausführungsform der Überspannungsschutzschaltung;

Fig. 8    ein zweites Ausführungsbeispiel der Überspannungsschutzschaltung in bipolarer Schaltungsauslegung für die Begrenzung positiver und negativer Betriebsspannungen und

Fig. 9    ein drittes Ausführungsbeispiel einer Überspannungsschutzschaltung mit eingesetzten elektronischen Entkopplungselementen (TBU).

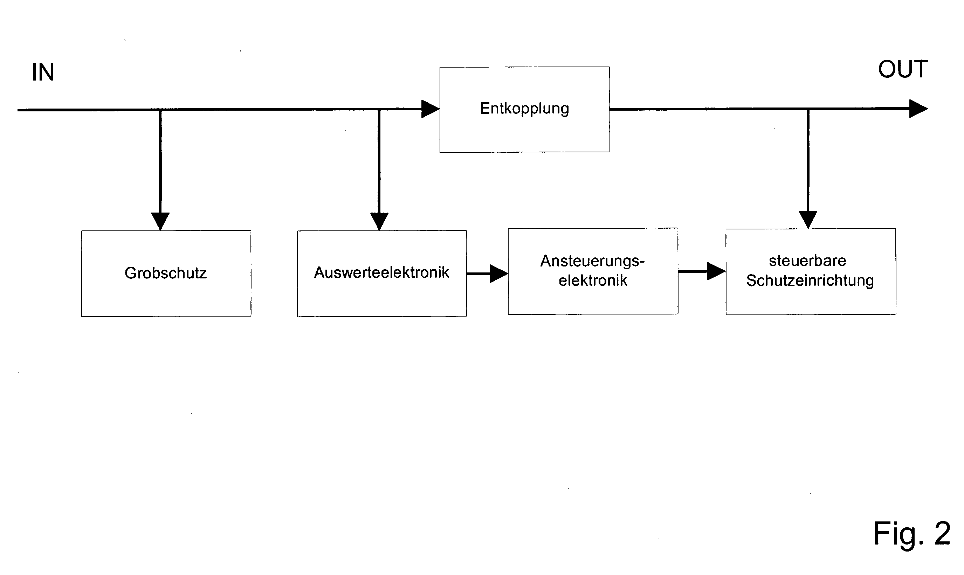

Wie in der Fig. 2 als Blockschaltbild gezeigt, umfasst die Überspannungsschutzschaltung zwischen Eingang IN und Ausgang OUT ein Grobschutzelement sowie eine steuerbare Feinschutzeinrichtung. Beide vorgenannten Baugruppen sind über eine Entkopplungseinheit voneinander getrennt.

Es ist darüber hinaus eine Auswerteelektronik vorgesehen, die mit einer Ansteuerungselektronik in Verbindung steht, welche wiederum ausgangsseitig auf die steuerbare Schutzeinrichtung einwirkt. Wie in der Fig. 2 ersichtlich, wird die anliegende Betriebsspannung der Auswerteelektronik zugeführt, wobei diese Elektronik die Betriebsspannung kontinuierlich beobachtet.

Steigt die anstehende Spannung, wird unter Berücksichtigung vorgegebener Kriterien entschieden, ob eine unzulässige Überspannung vorliegt. Liegen die Voraussetzungen für eine Überspannung vor, wird über eine Ansteuerungselektronik bzw. Ansteuerungseinrichtung die (Fein)Schutzeinrichtung aktiviert.

Abhängig von der Leistungsfähigkeit der steuerbaren (Fein)Schutzeinrichtung kann ein Grobschutz vorgeschaltet werden.

Die Auswerteelektronik hat hierbei die Aufgabe, zwischen einer Spannungsänderung als Überspannung oder einer zusätzlichen Änderung der Betriebsspannung zu unterscheiden.

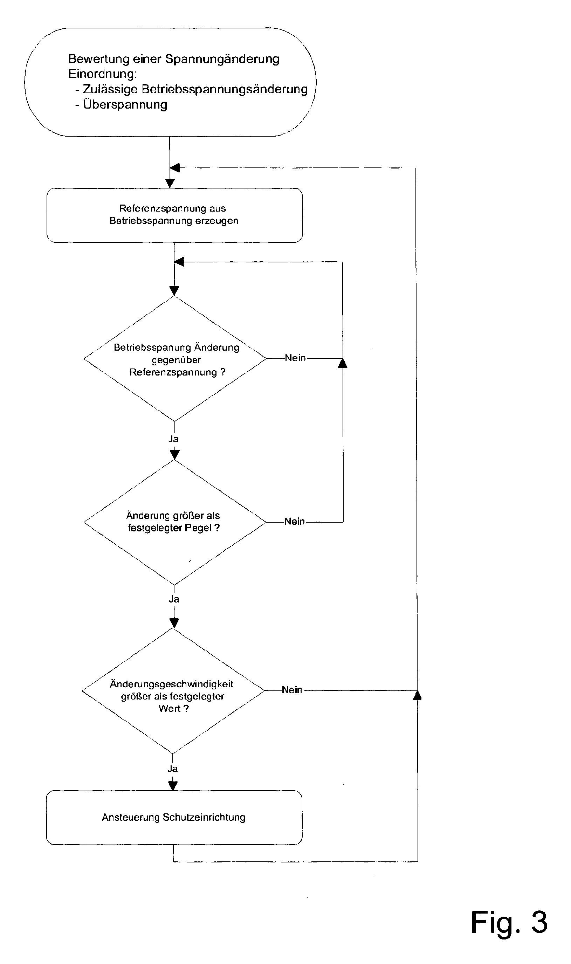

Ein Ablauf für die Bewertung der Spannungsänderungen durch die Auswerteelektronik zeigt die Fig. 3.

Zunächst wird aus der zugeführten Betriebsspannung eine Referenzspannung erzeugt, die zur Einstellung der Nennspannung und Begrenzungsspannung für die Überspannungsschutzschaltung verwendet wird.

Ändert sich die aktuelle Betriebsspannung gegenüber der Referenzspannung, wird entschieden, ob eine zulässige Betriebsspannungsänderung oder eine Überspannung vorliegt.

Für die Entscheidung werden folgende Kriterien bewertet:

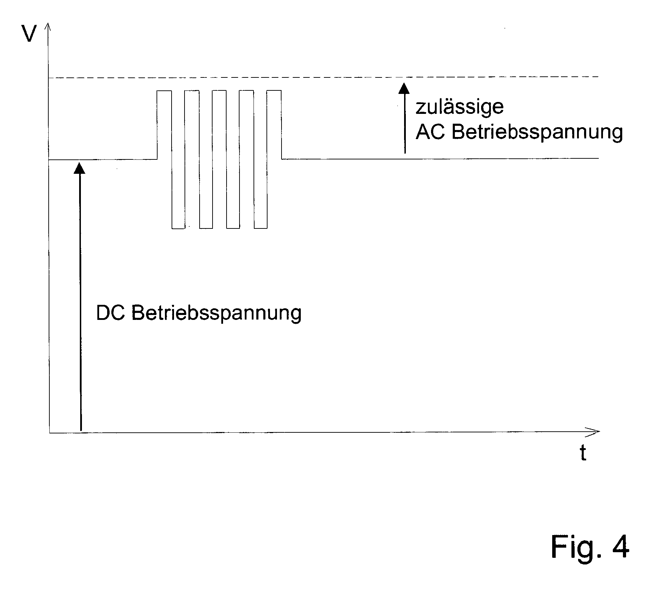

a) Liegt die Änderung innerhalb eines zulässigen Bereichs um die Referenzspannung, so handelt es sich um eine Signalspannung, die einer Versorgungsspannung überlagert ist. In diesem Fall erfolgt keine Begrenzung dieser anlagebedingten Änderung der Betriebsspannung. Ein entsprechendes Verhalten zeigt die Fig. 4.

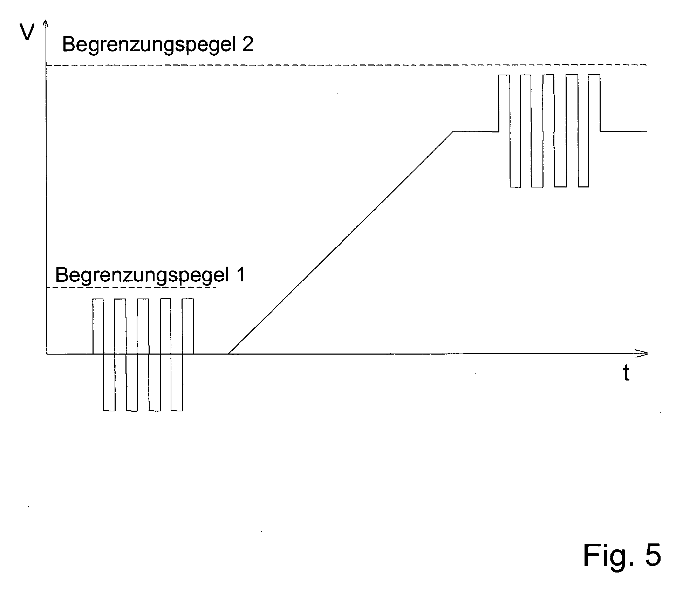

b) Für den Fall, dass der zulässige Bereich der Referenzspannung überschritten wird, die Anstiegsgeschwindigkeit der Spannungsänderung jedoch nicht einen festgelegten Wert überschreitet, wird auf eine unzulässige Änderung der Betriebsspannung erkannt. Es erfolgt hier jedoch ebenfalls noch keine Begrenzung des Spannungspegels. Vielmehr wird eine neue Referenzspannung generiert und so eine neue Nennspannung und Begrenzungsspannung für die Überspannungsschutzschaltung festgelegt. Dieses Verhalten ist mit der Fig. 5 dargestellt.

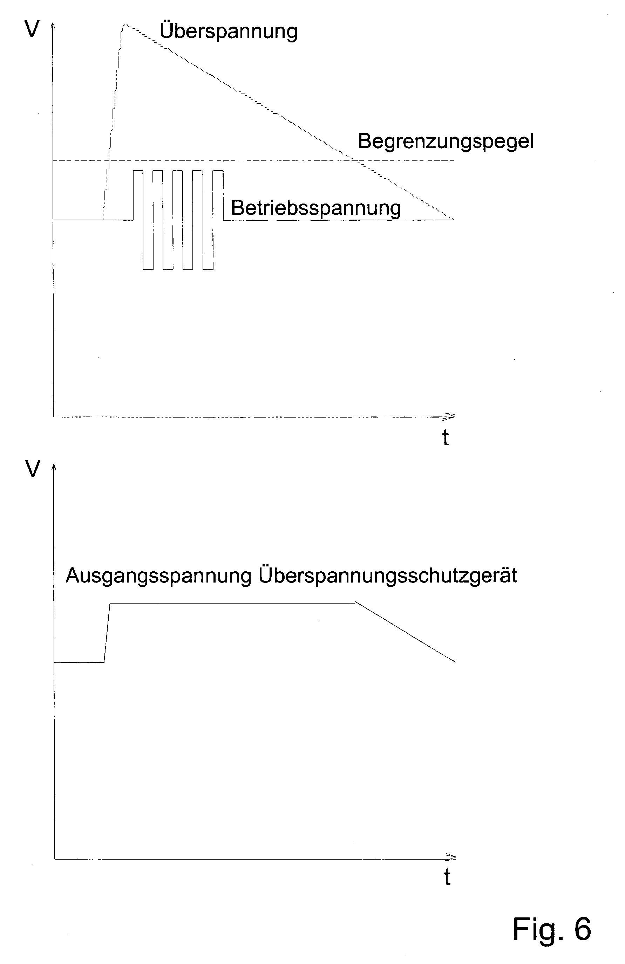

c) Wird der zulässige Bereich um die Referenzspannung überschritten und die Anstiegsgeschwindigkeit der Spannungsänderung überschreitet einen festgelegten Wert, handelt es sich um eine transiente Überspannung. In diesem Fall wird eine Begrenzung der Spannung eingeleitet, und zwar wie es in der Fig. 6 gezeigt ist.

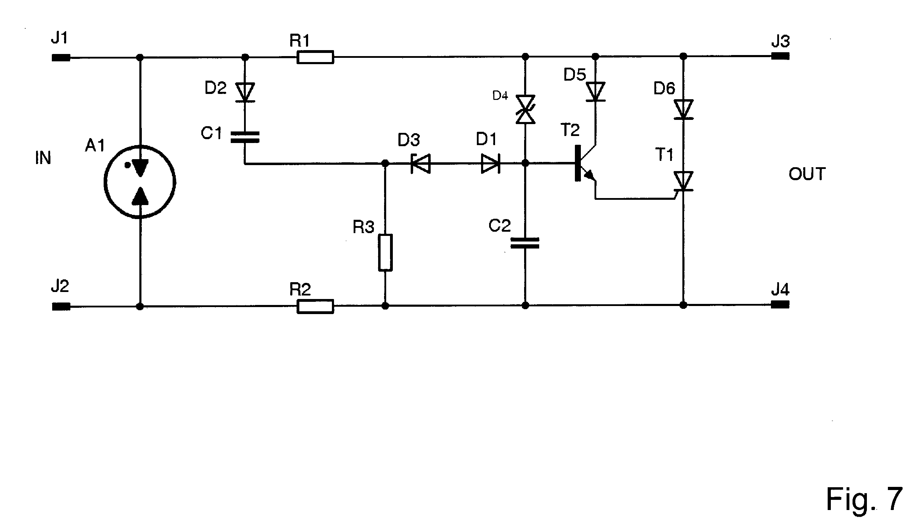

Die Fig. 7 zeigt ein ersten Ausführungsbeispiel einer praktisch realisierten Überspannungsschutzschaltung für die Begrenzung positiver Spannungsimpulse für Signale in informationstechnischen Anlagen.

Als Feinschutzelement wird hier ein Thyristor T1 verwendet, der über einen Transistor T2 angesteuert wird.

Mittels des Transistors T2 wird der Steuerstrom für den Thyristor T1 um den Faktor der Stromverstärkung durch den Transistor T2 reduziert, um die Belastung des Signalkreises zu vermindern.

Die Spannung über dem Kondensator C1 ist proportional zum DC-Anteil der Signalspannung. Die Zeitkonstante durch den Widerstand R3 und den Kondensator C1 legt die Einstellgeschwindigkeit dieser Referenzspannung fest.

Übersteigt die Anstiegsgeschwindigkeit des anstehenden Signals diese Zeitkonstante, fällt über dem Widerstand R3 eine Spannung ab.

Über die Auswahl der Zenerspannung der Zenerdiode D3 wird der zulässige Bereich für die Änderung der Betriebsspannung festgelegt.

In der gezeigten Schaltung mit der Diode D1 und dem Transistor T2 ergibt sich dieser Wert mit $U_Z$ + 2,3 V. Überschreitet die Spannung am Widerstand R3 diesen Wert, wird der Thyristor T1 gezündet.

Mit Hilfe des Kondensators C2 wird die Anstiegsgeschwindigkeit der Zündspannung für den Thyristor T1 begrenzt. Vorteilhaft ist dies, um bei Signalspannungen mit hohen Anstiegsgeschwindigkeiten (Rechtecksignalen) ein unerwünschtes Zünden zu vermeiden.

Über die Zenerdiode D4 erfolgt das Festlegen der maximalen Begrenzungsspannung der vorgestellten Schaltung.

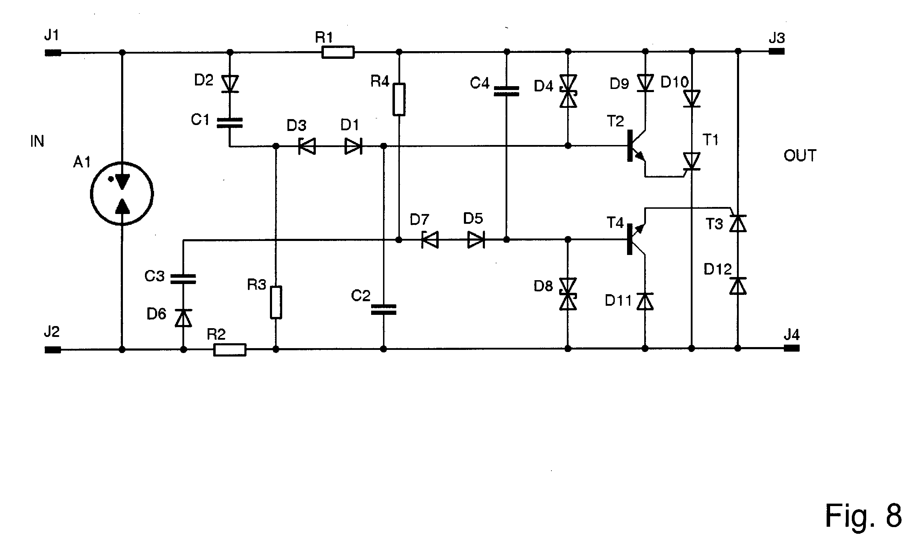

Die Fig. 8 zeigt eine weitere Ausführungsform der Erfindung, die auf den Erläuterungen der Schaltung nach Fig. 7 basiert, welche jedoch bipolar ausgelegt ist, so dass eine Begrenzung positiver und negativer Betriebsspannungen möglich ist.

Die in Fig. 8 gezeigte Schaltungsanordnung für bipolare Betriebsspannungen weist in der dargestellten Auslegung zwei Thyristoren T1, T3 für die jeweilige Polarität auf. Alternativ könnte hier auch ein Triac eingesetzt werden.

Die Auswerteelektronik ist bei dem in Fig. 8 gezeigten Beispiel redundant ausgeführt. So wird die Referenzspannung für positive Gleichspannungsanteile über C1 erzeugt. Bei negativen DC-Spannungen wird die Referenzspannung über C3 generiert. Ein zusätzlicher Vorteil dieser Ausführungsform ist, dass die Anschlüsse der Überspannungsschutzschaltung vertauscht werden können und damit eine Verpolungssicherheit gegeben ist und Fehler bei der Installation ausgeschlossen werden.

Die Ansteuerung der Thyristoren erfolgt im Beispiel nach Fig. 8 getrennt für die jeweilige Polarität auf den dafür vorgesehenen Thyristor. Bei Verwendung eines Triac oder beim Einsatz von Thyristoren mit zwei Gates, die anoden- und kathodenseitig steuerbar sind, ist auch eine Ausführung mit einer separaten Auswerteelektronik und Ansteuerung möglich.

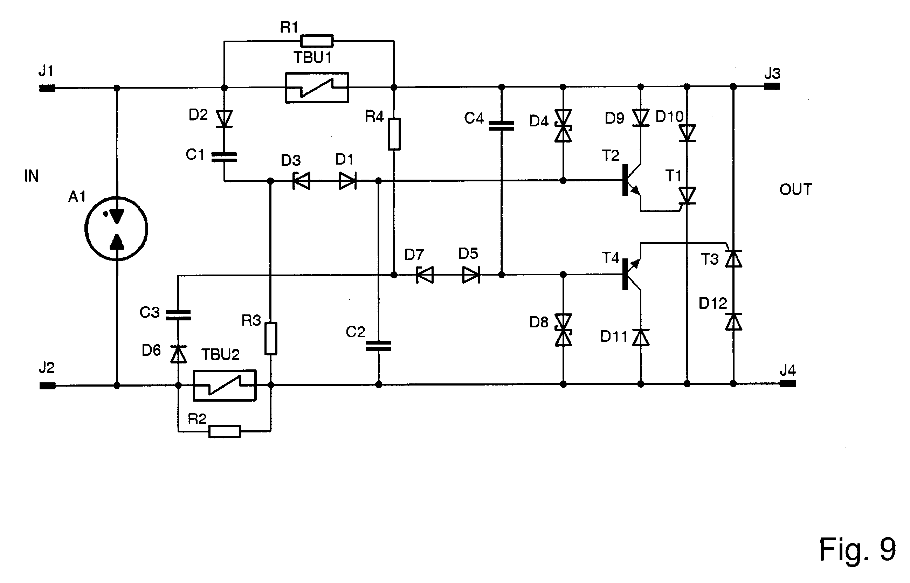

Bei der Ausführungsform der Schaltungsanordnung nach Fig. 9 sind die Vorteile elektronischer Entkopplungselemente (TBU) mit der vorgestellten erfindungsgemäßen Lösung eines steuerbaren Feinschutzelements in bipolarer Ausführung kombiniert.

Die in der Fig. 9 gezeigte Schaltungsanordnung entspricht in ihrer Funktion der Auswerteelektronik und Ansteuerung der Thyristoren weitgehend dem Beispiel gemäß Fig. 8.

Ein Unterschied liegt in der Anwendung eines TBU (Transient Blocking Unit) anstelle eines konventionellen Widerstands oder einer Induktivität als Entkopplungselement.

Die Funktion des TBU kann mit der eines elektronischen Schalters verglichen werden. Der TBU überwacht den Stromfluss zwischen seinem Ein- und Ausgang. Überschreitet der Strom einen fest eingestellten Wert, löst der TBU aus und schaltet die Verbindung Ein-Ausgang sehr schnell ab. Durch diese Funktion kann ein ideales Entkopplungselement realisiert werden, mit dem eine sehr geringe Strombelastung des Feinschutzes und damit einhergehend ein sehr niedriger Schutzpegel für die Überspannungsschutzschaltung erreicht werden.

Nachteilig an TBU-Bauteilen ist es, dass zum Rücksetzen vom getriggerten Zustand, d.h. dem hochohmigen Zustand, in den Ausgangszustand, der niederohmig ist, die Spannung über dem TBU einen bestimmten Wert, im konkreten Fall 14V, unterschreiten muss. Beim Betrieb an einer Gleichspannung > 14V ist dies jedoch nicht ohne zusätzliche Maßnahmen zu gewährleisten.

Durch die Parallelschaltung eines Widerstands zum TBU wurde erfindungsgemäß eine einfache Möglichkeit gefunden, dies bei einem vorgegebenen maximalen Betriebsstrom zu erreichen.

Für das gezeigte Beispiel lässt sich dieser Widerstand wie folgt bestimmen: Maximaler Betriebsstrom: 100 mA

Spannung über dem TBU: ≤10V

$$R = \frac{10V}{0,1A} = 100\Omega$$

Selbstverständlich ist hier auch eine Kombination in Form einer Serien- oder Parallelschaltung von TBU und Widerstand als Entkopplungselement möglich.

Damit nach dem Auslösen eines TBU dieser nach Abklingen der Störung wieder in seinen niederohmigen Ausgangszustand zurückkehrt, ist dafür Sorge getragen, dass der Spannungsabfall über dem TBU unter einen bestimmten Wert fällt. Durch eine geeignete Dimensionierung der Kombination TBU und Widerstand kann für ein notwendiges Rückstellen Sorge getragen werden.

Mit der vorgestellten Lösung wird eine Überspannungsschutzschaltung geschaffen, die sich automatisch an die jeweilige Betriebsspannung anpasst. Dabei sorgt eine Auswerteelektronik für ein Aktivieren der Schutzeinrichtung, wenn eine relevante Überspannung detektiert wird.

Der Wert für die Begrenzungsspannung wird kontinuierlich der Betriebsspannung angepasst, so dass eine optimale Spannungsbegrenzung beim Eintreffen einer Überspannung für den jeweilig aktuellen Wert der Betriebsspannung erreicht wird.

Die Auswerteelektronik ist in der Lage, auf der Basis einer Signalanalyse (Änderungsgeschwindigkeit, Spannungshub, maximaler Pegel) der Betriebsspannung eine Bewertung durchzuführen, um eindeutig zu ermitteln, ob eine zulässige Betriebsspannung oder eine Überspannung vorliegt. Die Ansteuerschaltung für den Wechselspannungsteil der Betriebsspannung ist kapazitätsarm realisierbar und es besteht die Möglichkeit einer bipolaren Ausführung der Schaltung für positive und negative Signale und Betriebsspannungen.

Die Begrenzung der Ansprechspannung kann auf einen festen oberen Grenzwert durch eine zusätzliche Z-Diode eingestellt werden, wobei in diesem Fall die Spannungsbegrenzerschaltung direkt unter Umgehung der Auswerteelektronik ansteuerbar ist. Durch die in den Ausführungsbeispielen vorgesehene Reihenschaltung einer Diode mit einem Thyristor ist es möglich, den Sperrstrom und die Kapazität der gesamten Schaltungsanordnung zu verringern.

Es soll noch darauf hingewiesen werden, dass Änderungsgeschwindigkeiten, wie sie beim Einschalten der Betriebsspannung oder bei Änderungen von Betriebszuständen auftreten, erfindungsgemäß nicht zum Ansprechen der Überspannungsschutzschaltung führen sollen. Als Beispiel kann hier das Einschalten einer Betriebsspannung mit 24V DC herangezogen werden. Dieser Einschaltvorgang kann mit einer typischen Zeit von 1ms angenommen werden. Damit ergäbe sich eine Änderungsgeschwindigkeit von 24 V/ms.

Im Gegensatz hierzu weisen Überspannungsimpulse, wie sie durch Blitzeinwirkung oder auf Schalthandlungen zurückzuführen sind, eine wesentlich höhere Anstiegsgeschwindigkeit auf. Beispielsweise ist in den Richtlinien für Telekommunikationsanlagen die niedrigst anzunehmende Beeinflussung mit einer Impulsform 10/700μs und einer Amplitude von 1kV spezifiziert. Hieraus ergibt sich eine Änderungsgeschwindigkeit von 100V/μs.

**Patentansprüche**

1. Mehrstufige Überspannungsschutzschaltung, insbesondere für informationstechnische Anlagen, mit mindestens einem Grobschutz- und mindestens einem Feinschutzelement, wobei das mindestens eine Feinschutzelement von einer Ansteuerungseinrichtung schwellwertabhängig aktivierbar ist, wobei die anliegende Betriebsspannung auf eine Auswerteeinrichtung geführt ist, welche eine Referenzspannung erzeugt, weiterhin eine Bewertungseinheit vorgesehen ist, um erstens zu überprüfen, ob die aktuelle Betriebsspannung über der Referenzspannung liegt, **dadurch gekennzeichnet, dass** die Bewerrungseinheit vorgeshen ist, um zweitens zu überprüfen, ob die Werteüberschreitung einen vorherbestimmten Pegel übersteigt, sowie um drittens festzustellen, ob die Änderungsgeschwindigkeit der Betriebsspannung größer als ein weiterer vorherbestimmter Wert ist, so dass eine transiente Überspannung vorliegt, wobei dann die Ansteuerungseinrichtung von der Auswerteeinrichtung ein Aktivierungssignal erhält.

2. Überspannungsschutzschaltung nach Anspruch 1, **dadurch gekennzeichnet, dass** bei einer Werteüberschreitung des vorherbestimmten Pegels der Betriebsspannung, die mit geringeren Änderungsgeschwindigkeiten verbunden ist, die Auswerteeinrichtung eine neue, an die momentanen Betriebsverhältnisse angepasste, aktuelle Referenzspannung bereitstellt.

3. Überspannungsschutzschaltung nach Anspruch 1 oder 2, **dadurch gekennzeichnet, dass** in der Auswerteeinrichtung die Betriebsspannung über eine Diode (D2) auf einen Kondensator (C1) gelangt, der über einen Reihenwiderstand (R3) mit Betriebsspannungspotential verbunden ist, wobei die über dem Kondensator (C1) anliegende Spannung die Referenzspannung ist.

4. Überspannungsschutzschaltung nach Anspruch 3, **dadurch gekennzeichnet, dass** die Zeitkonstante aus Widerstand (R3) und Kondensator (C1) die Änderungsgeschwindigkeit der Betriebsspannung definiert, wobei beim Überschreiten der Zeitkonstante über dem Widerstand (R3) eine Spannung anliegt.

5. Überspannungsschutzschaltung nach Anspruch 4, **dadurch gekennzeichnet, dass** am Verbindungspunkt vom Kondensator (C1) und dem Widerstand (R3) eine Zenerdiode (D3) vorgesehen ist, welche den zulässigen Bereich der Änderung der Betriebsspannung definiert.

6. Überspannungsschutzschaltung nach Anspruch 5, **dadurch gekennzeichnet, dass** ausgangsseitig der Zenerdiode (D3) ein gegen Betriebsspannungspotential geschalteter weiterer Kondensator (C2) vorgesehen ist, um die Anstiegsgeschwindigkeit der Zündspannung des Feinschutzelements zu begrenzen.

7. Überspannungsschutzschaltung nach Anspruch 6, **dadurch gekennzeichnet, dass** das Feinschutzelement (T1) über einen Transistor (T2) angesteuert wird, dessen Basis am Kondensator (C2) angeschlossen ist.

8. Überspannungsschutzschaltung nach Anspruch 7, **dadurch gekennzeichnet, dass** zwischen Betriebsspannungspotential und der Basis des Transistors (T2) eine weitere Zenerdiode (D4) zur Einstellung der maximalen Begrenzungsspannung geschaltet ist.

9. Überspannungsschutzschaltung nach einem der vorangegangenen Ansprüche, **dadurch gekennzeichnet, dass** zwischen den Schutzstufen ein Entkopplungselement in Form eines Widerstands, einer Induktivität, einer Kapazität und/oder einer TBU-Baugruppe geschaltet ist.

**Claims**

1. Multi-stage overvoltage protection circuit, in particular for information technology systems, comprising at least one coarse-protection element and at least one fine-protection element, wherein the at least one fine-protection element can be activated by a triggering device depending on a threshold, wherein the present operating voltage is passed to an analyzer which generates a reference voltage, wherein further an evaluation unit is provided, firstly for checking whether the current operating voltage exceeds the reference voltage, **characterized in that** the evaluation unit is provided, secondly for checking whether the value exceedance exceeds a predetermined level and, thirdly, for finding out whether the rate of change of the operating voltage is greater than another predetermined value so that there is a transient overvoltage, wherein the triggering device then receives an activation signal from the analyzer.

2. Overvoltage protection circuit according to claim 1, **characterized in that** in the event of a value exceedance of the predetermined level of the operating voltage, which is associated with lower rates of change, the analyzer provides a new, current reference voltage which is adapted to the current operating conditions.

3. Overvoltage protection circuit according to claim 1 or 2, **characterized in that** the operating voltage in the analyzer is passed via a diode (D2) to a capacitor (C1), which capacitor (C1) is connected to an operating voltage potential via a resistor (R3) connected in series, with the voltage present at capacitor (C1) being the reference voltage.

**4.** Overvoltage protection circuit according to claim 3, **characterized in that** the time constant defined by the resistor (R3) and the capacitor (C1) defines the rate of change of the operating voltage, wherein a voltage is present at resistor (R3) if the time constant is exceeded.

**5.** Overvoltage protection circuit according to claim 4, **characterized in that** at the connection point between the capacitor (C1) and the resistor (R3) a Zener diode (D3) is provided, which defines the acceptable range of the change of the operating voltage.

**6.** Overvoltage protection circuit according to claim 5, **characterized in that** at the output end of the Zener diode (D3) another capacitor (C2) is provided, which is connected towards the operating voltage potential, in order to limit the slew rate of the trigger voltage of the fine-protection element.

**7.** Overvoltage protection circuit according to claim 6, **characterized in that** the fine-protection element (T1) is triggered by a transistor (T2) the base of which is connected to the capacitor (C2).

**8.** Overvoltage protection circuit according to claim 7, **characterized in that** another Zener diode (D4) for adjusting the maximum limit voltage is connected between the operating voltage potential and the base of the transistor (T2).

**9.** Overvoltage protection circuit according to one of the preceding claims, **characterized in that** a decoupling element in the form of a resistor, an inductance, a capacity and/or a TBU unit is connected between the protections stages.

**Revendications**

**1.** Circuit de protection anti-surtension à plusieurs étages, en particulier pour installations informatiques, qui comprend au moins un élément de protection grossière et au moins un élément de protection fine, dans lequel ledit au moins un élément de protection fine est susceptible d'être activé en fonction d'une valeur seuil par un système de pilotage, dans lequel la pression de service appliquée est amenée à un dispositif d'évaluation qui engendre une tension de référence, et dans lequel il est en outre prévu une unité de jugement, afin de vérifier en premier lieu si la tension de service actuelle est située au-dessus de la tension de référence, **caractérisé en ce que** l'unité de jugement est prévue afin de vérifier en second lieu si le dépassement de valeur dépasse un seuil prédéterminé et afin de constater en troisième lieu si la vitesse de variation de la tension de service est supérieure à une autre valeur prédéterminée, de sorte qu'on est en présence d'une surtension transitoire et le système de pilotage reçoit alors un signe d'activation de la part du dispositif d'évaluation.

**2.** Circuit de protection anti surtension selon la revendication 1, **caractérisé en ce que** lors d'un dépassement de valeur du seuil prédéterminé de la tension de service qui est relié à de faibles vitesses de variation, le dispositif d'évaluation prépare une nouvelle tension de référence actuelle adaptée aux conditions de fonctionnement momentanées.

**3.** Circuit de protection anti surtension selon la revendication 1 ou 2, **caractérisé en ce que** dans le dispositif d'évaluation la tension de service parvient via une diode (D2) à un condensateur (C1) qui est relié à un potentiel de tension de service via une résistance série (R3), et la tension appliquée via le condensateur (C1) est la tension de référence.

**4.** Circuit de protection anti surtension selon la revendication 3, **caractérisé en ce que** la constante temporelle issue de la résistance (R3) et du condensateur (C1) définit la vitesse de variation de la tension de service et en cas de dépassement de la constante temporelle une tension est appliquée via la résistance (R3).

**5.** Circuit de protection anti surtension selon la revendication 4, **caractérisé en ce qu'**il est prévu une diode Zener (D3) au point de liaison du condensateur (C1) et de la résistance (R3), diode qui définit la plage admissible de la variation de la tension de service.

**6.** Circuit de protection anti surtension selon la revendication 5, **caractérisé en ce qu'**il est prévu à la sortie de la diode Zener (D3) un autre condensateur (C2) branché au potentiel de tension de service, afin de limiter la vitesse de montée de la tension d'amorçage de l'élément de protection fine.

**7.** Circuit de protection anti surtension selon la revendication 6, **caractérisé en ce que** l'élément de protection fine (T1) est piloté via un transistor (T2), dont la base est raccordée au condensateur (C2).

**8.** Circuit de protection anti surtension selon la revendication 7, **caractérisé en ce qu'**une autre diode Zener (D4) est branchée entre le potentiel de tension de service et la base du transistor (T2) pour établir la tension de limitation maximale.

**9.** Circuit de protection anti surtension selon l'une des revendications précédentes, **caractérisé en ce qu'**un élément de découplage est branché entre les étages de protection, sous la forme d'une résistance, d'une inductance, d'une capacité et/ou d'un groupe structurel TBU ("Transient Blocking Unit").

## Stand der Technik

IN →  R1  OUT

A1  V1

Fig. 1

**IN**

**OUT**

Grobschutz

Auswerteelektronik

Ansteuerungs-elektronik

steuerbare Schutzeinrichtung

Entkopplung

Fig. 2

Bewertung einer Spannungänderung
Einordnung:
- Zulässige Betriebsspannungsänderung
- Überspannung

Referenzspannung aus
Betriebsspannung erzeugen

Betriebsspanung Änderung
gegenüber
Referenzspannung ?

Nein

Ja

Änderung größer als
festgelegter Pegel ?

Nein

Ja

Änderungsgeschwindigkeit
größer als festgelegter
Wert ?

Nein

Ja

Ansteuerung Schutzeinrichtung

Fig. 3

Fig. 4

Fig. 5

V

Überspannung

Begrenzungspegel

Betriebsspannung

t

V

Ausgangsspannung Überspannungsschutzgerät

t

Fig. 6

Fig. 7

Fig. 8

Fig. 9

EP 2 340 593 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19845281 A1
- DE 102004036164 A1
- EP 1278283 A2
- WO 2004006408A1 A
- WO 0250973A1 A1
- EP 0827316 A